# EUROPEAN PATENT APPLICATION

(11) **EP 4 344 018 A1**
(43) Date of publication of application: **27.03.2024**
(21) Application number: 22803886.5
(22) Date of filing: 13.05.2022
(51) Int. Cl.: H02J 50/00, H02J 50/20, H02J 50/40

(54) **WIRELESS CHARGING DEVICE AND CHARGING METHOD**

(30) Priority: 20.05.2021 CN 202110552500
(71) Applicant: Vivo Mobile Communication Co., Ltd., Dongguan, Guangdong 523863 (CN)
(72) Inventor: ZHANG, Pengyao, Dongguan, Guangdong 523863 (CN); HE, Yifan, Dongguan, Guangdong 523863 (CN)
(74) Representative: Petraz, Gilberto Luigi
(86) International application number: PCT/CN2022/092716
(87) International publication number: WO 2022/242564

(57) **Abstract**

Provided are a wireless charging device and a charging method, which belong to the technical field of electronic devices. A wireless charging device includes a power supply, a control system, a driving mechanism, and at least one antenna module (10), where the power supply is connected to the control system, the control system is connected to the driving mechanism, the driving mechanism is connected to the at least one antenna module (10), each antenna module (10) includes an antenna array structure (12) and a feeding network (11) connected to the antenna array structure (12), and the feeding network (11) is connected to the control system; where the feeding network (11) is configured to feed the antenna array structure (12), so that the antenna array structure (12) emits electromagnetic waves, and the driving mechanism is configured to drive a target antenna module to move, so that electromagnetic waves generated by the antenna array structure (12) in the target antenna module cover a device to be charged, and the target antenna module is an antenna module whose antenna array structure (12) generates electromagnetic waves.

## Description

### CROSS-REFERENCE TO RELATED APPLICATION

This application claims priority to Chinese Patent Application No. 202110552500.6, filed on May 20, 2021 in China, which is incorporated herein by reference in its entirety.

### TECHNICAL FIELD

The present application belongs to the technical field of electronic devices, and in particular relates to a wireless charging device and a charging method.

### BACKGROUND

With the rapid development of electronic devices, users' demand for efficient and convenient charging of electronic devices is increasing, and the charging method of electronic devices has also developed from traditional wired charging to wireless charging. At present, the wireless charging of electronic devices is based on the proximity of the built-in resonant electromagnetic field to achieve charging. Electronic devices need to be placed on the wireless charging device, or placed very close to the wireless charging device. This also causes difficulties for users to use electronic devices.

### SUMMARY

The purpose of the embodiment of the present application is to provide a wireless charging device and a charging method, which can solve the problem that the existing wireless charging device requires that a device to be charged needs to be placed at a specific location to realize wireless charging, which leads to the inflexibility of wireless charging.

According to a first aspect, the embodiment of the present application provides a wireless charging device, including a power supply, a control system, a driving mechanism, and at least one antenna module, where the power supply is connected to the control system, the control system is connected to the driving mechanism, the driving mechanism is connected to the at least one antenna module, each antenna module includes an antenna array structure and a feeding network connected to the antenna array structure, and the feeding network is connected to the control system;
where the feeding network is configured to feed the antenna array structure, so that the antenna array structure emits electromagnetic waves, and the driving mechanism is configured to drive a target antenna module to move, so that electromagnetic waves generated by the antenna array structure in the target antenna module cover a device to be charged, and the target antenna module is an antenna module whose antenna array structure generates electromagnetic waves.

According to a second aspect, the embodiment of the present application provides a charging method, which is applied to the wireless charging device as described in the first aspect, and the method includes:
receiving a charging request sent by a device to be charged;
determining, based on the charging request, a first position of the device to be charged; and
determining a target antenna module based on the first position, controlling a feeding network in the target antenna module to feed a connected antenna array structure, and controlling the target antenna module to move to a second position, so that electromagnetic waves generated by the antenna array structure in the target antenna module cover the first position to charge the device to be charged;
where the target antenna module is at least one of the at least one antenna module.

According to a third aspect, an embodiment of the present application provides a charging apparatus, which is applied to the charging method described in the second aspect, and the apparatus includes:
a receiving module, configured to receive a charging request sent by a device to be charged;
a determining module, configured to determine, based on the charging request, a first position of the device to be charged; and
a control module, configured to determine a target antenna module based on the first position, control a feeding network in the target antenna module to feed a connected antenna array structure, and control the target antenna module to move to a second position, so that electromagnetic waves generated by the antenna array structure in the target antenna module cover the first position to charge the device to be charged;
where the target antenna module is at least one of the at least one antenna module.

According to a fourth aspect, the embodiments of the present application provide a wireless charging device, including a processor, a memory, and a program or an instruction stored in the memory and executable on the processor, and when the program or the instruction is executed by the processor, steps of the charging method according to the second aspect are implemented.

According to a fifth aspect, the embodiment of this application provides a readable storage medium. The readable storage medium stores a program or an instruction, and when the program or the instruction is executed by a processor, steps of the charging method in the second aspect are implemented.

According to a sixth aspect, the embodiments of the present application provide a chip, where the chip includes a processor and a communications interface, the communications interface is coupled to the processor, and the processor is configured to run a program or an instruction, to implement the charging method according to the second aspect.

According to a seventh aspect, a computer program product is provided, stored in a non-transient storage medium, and the computer program product is executed by at least one processor to implement the method according to the second aspect.

According to an eighth aspect, a communication device is provided, configured to execute the method according to the second aspect.

In the embodiment of the present application, the driving mechanism is connected to at least one antenna module, so that the wireless charging device can selectively drive, through the driving mechanism according to the positions or quantity of devices to be charged, one or more of the antenna modules to move, so that the electromagnetic waves generated by the one or more antenna modules can cover the device to be charged, so that the antenna module that needs to transmit electromagnetic waves can be selected more flexibly. Regardless of where the device to be charged is located relative to the wireless charging device, the device to be charged can be located within the coverage of electromagnetic waves to realize wireless charging, and the device to be charged does not need to be placed at a specific location, which makes the wireless charging manner of the wireless charging device more flexible for the charging device and provides users with a better wireless charging experience.

### BRIEF DESCRIPTION OF DRAWINGS

FIG. 1 is a structural diagram of a wireless charging device provided by an embodiment of the present application;
FIG. 2 is a disassembled structural diagram of a wireless charging device provided by an embodiment of the present application;
FIG. 3 is a structural diagram of an antenna array structure in a wireless charging device provided by an embodiment of the present application;
FIG. 4 is a structural diagram of an antenna unit in FIG. 3;
FIG. 5 is an expanded structural diagram 1 of a wireless charging device shown in FIG. 3;
FIG. 6 is an expanded structural diagram 2 of a wireless charging device shown in FIG. 3;
FIG. 7 is a flowchart of a charging method provided by an embodiment of the present application;
FIG. 8 is a structural diagram of a charging apparatus provided by an embodiment of the present application; and
FIG. 9 is a structural block diagram of a wireless charging device provided by an embodiment of the present application.

### DESCRIPTION OF EMBODIMENTS

The following clearly and completely describes the technical solutions in the embodiments of this application with reference to the accompanying drawings in the embodiments of this application. Apparently, the described embodiments are some but not all of the embodiments of this application. All other embodiments obtained by a person of ordinary skill in the art based on the embodiments of this application without creative efforts shall fall within the protection scope of this application.

The terms "first", "second", and the like in this specification and claims of this application are used to distinguish between similar objects instead of describing a specific order or sequence. It should be understood that data used in such a way are interchangeable in proper circumstances, so that the embodiments of this application can be implemented in an order other than the order illustrated or described herein. Objects classified by "first", "second", and the like are usually of a same type, and the number of objects is not limited. For example, there may be one or more first objects. In addition, in the specification and the claims, "and/or" represents at least one of connected objects, and a character "/" generally represents an "or" relationship between associated objects.

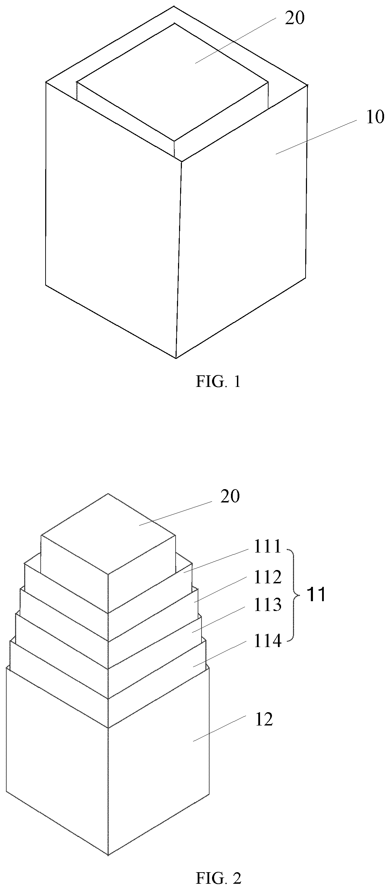

An embodiment of the present application provides a wireless charging device. Referring to FIG. 1 to FIG. 6, a wireless charging device includes a power supply (not shown in the figure), a control system (not shown in the figure), a driving mechanism (not shown in the figure), and at least one antenna module 10, where the power supply is connected to the control system, the control system is connected to the driving mechanism, the driving mechanism is connected to the at least one antenna module, each antenna module includes an antenna array structure 12 and a feeding network 11 connected to the antenna array structure, and the feeding network 11 is connected to the control system; where the feeding network 11 is configured to feed the antenna array structure 12, so that the antenna array structure 12 emits electromagnetic waves, and the driving mechanism is configured to drive a target antenna module to move, so that electromagnetic waves generated by the antenna array structure 12 in the target antenna module cover a device to be charged, and the target antenna module is an antenna module whose antenna array structure 12 generates electromagnetic waves.

Optionally, the wireless charging device may be provided with a base 20, and the base 20 is covered with a metal shell to form an airtight accommodation space, and the power supply and control system may be located in the accommodation space. The driving mechanism can also be located in the accommodation space of the base 20, or can also be arranged outside the base 20. The control system is connected to the driving mechanism, so that it can control the operation of the driving mechanism, and the operation of the driving mechanism can drive one or more antenna modules 10 (that is, the target antenna module) in the at least one antenna module to move, so that one or more antenna modules 10 move to a target position. One or more antenna modules 10 are driven by the driving mechanism, the antenna array structures 12 included in these antenna modules 10 generate electromagnetic waves, and then these antenna modules 10 can emit electromagnetic waves, and the driving mechanism is configured to drive these antenna modules 10 to move to the target position. At the target position, the emission direction of the electromagnetic waves generated by the antenna array structures 12 in these antenna modules 10 covers the device to be charged, thereby realizing wireless charging for the device to be charged. It should be noted that for the principle of emitting electromagnetic waves in a wireless manner to realize wireless charging of electronic devices, refer to related technologies, and details are not described in this embodiment of the present application.

Optionally, the driving mechanism can drive one or more antenna modules 10 in the at least one antenna module 10 to move, and the number of the target antenna modules can be one or more. The driving mechanism may drive the target antenna module to rotate or move.

In the embodiment of the present application, the driving mechanism is connected to at least one antenna module, so that the wireless charging device can selectively drive, through the driving mechanism according to the positions or quantity of devices to be charged, one or more of the antenna modules 10 to move, so that the electromagnetic waves generated by the one or more antenna modules 10 can cover the device to be charged, so that the antenna module that needs to transmit electromagnetic waves can be selected more flexibly. Regardless of where the device to be charged is located relative to the wireless charging device, the device to be charged can be located within the coverage of electromagnetic waves to realize wireless charging, and the device to be charged does not need to be placed at a specific location, which makes the wireless charging manner of the wireless charging device more flexible for the charging device and provides users with a better wireless charging experience.

It should be noted that the control system may control the feeding network 11 to feed the antenna array structure 12 only when the device to be charged needs to be charged, so that the antenna array structure 12 emits electromagnetic waves to realize the charging of the device to be charged. If there is no device to be charged, the control system controls the feeding network 11 to stop feeding the antenna array structure 12, and the antenna array structure 12 will not emit electromagnetic waves, so as to reduce the damage of electromagnetic wave radiation to the human body.

Optionally, the wireless charging device includes a sensor (not shown) for sensing an orientation of the device to be charged, and the sensor is connected to the control system. It can be understood that most of the existing electronic devices are equipped with an infrared emitting apparatus and an infrared receiving apparatus, and the sensor can be an infrared receiver arranged on the top of the base 20. When the device to be charged has a wireless charging requirement, it can call its internal infrared emitting apparatus to transmit modulated pulse infrared code to the outside. The infrared receiver on the wireless charging device demodulates after receiving the pulse infrared code, and determine, based on the pulse infrared code, the first position of the device to be charged, and then the control system controls, according to the first position of the device to be charged, the feeding network 11 in the target antenna module corresponding to the first position to feed the connected antenna array structure 12, so that the antenna array structure 12 generates electromagnetic waves covering the device to be charged, to realize wireless charging of the device to be charged. In addition, the control system is also configured to control, according to the first position of the device to be charged, the corresponding antenna module 10 to rotate, so as to ensure that the device to be charged is within the coverage of the electromagnetic wave emitted by the target antenna module.

Further, each antenna module 10 includes at least one feeding network 11, each feeding network 11 is connected to the control system, and the control system is configured to control a target feeding network to connect to the antenna array structure 12, so that the antenna array structure 12 emits electromagnetic waves, and the target feeding network is any one of the at least one feeding network 11. Different feeding networks 11 are configured to cause the antenna array structure 12 to emit electromagnetic waves at different scanning angles. It can be understood that the scanning angle of the electromagnetic wave can also be understood as the radiation angle of the electromagnetic wave, or the radiation range.

In the embodiment of the present application, one feeding network 11 corresponds to one scanning angle. As shown in FIG. 2, one antenna module 10 includes four feeding networks 11, namely a first feeding network 111, a second feeding network 112, a third feeding network 113 and a fourth feeding network 114. The scanning angle corresponding to the first feeding network 111 is 0 degree, the scanning angle corresponding to the second feeding network 112 is 30 degrees, the scanning angle corresponding to the third feeding network 113 is 60 degrees, and the fourth feeding network 114 is a circularly polarized feeding network. When the first feeding network 111 excites the antenna array to generate electromagnetic waves, the scanning angle of the electromagnetic waves is 0 degrees, that is, the emission direction of the electromagnetic waves is directly towards the front without offset; when the second feeding network 112 excites the antenna array to generate electromagnetic waves, the emission direction of the electromagnetic wave offsets by 30 degrees; when the third feeding network 113 excites the antenna array to generate electromagnetic waves, the emission direction of the electromagnetic wave offsets by 60 degrees. In this way, the antenna array structure 12 can be excited to generate electromagnetic waves through different feeding networks 11, so that the antenna array structure 12 can realize scanning from 0 to 60 degrees, that is, electric scanning. Of course, the scanning angle corresponding to the feeding network 11 can also be other angles. For example, the antenna module 10 includes two feeding networks 11, and corresponding scanning angles are 0 degrees and 45 degrees respectively; or the antenna module 10 corresponds to 4 feeding networks 11, and corresponding scanning angles are 0 degree, 25 degrees, 50 degrees and 75 degrees respectively.

Optionally, different feeding networks 11 correspond to different electrical lengths, so that the antenna array structure 12 emits electromagnetic waves at different scanning angles. In the embodiment of the present application, when the feeding network 11 feeds the antenna array structure 12, the feeding network 11 and the antenna array structure 12 can form a dipole antenna, and by adjusting the feed port size of the dipole antenna, the length and width of the dipole antenna are optimized, so that when it scans to a preset angle, its gain is only 3dB lower than that with scanning, which can effectively meet the requirements of wide wireless charging coverage. The preset angle may be a scanning angle preset by the user during the optimization process, for example, the preset angle may be a corresponding scanning angle of the feeding network 11, or the preset angle may also be a fixed value, such as 60 degrees.

It should be noted that during the optimization process of the dipole antenna, the length and width of the dipole antenna may be adjusted based on an optimization criterion that the gain of the dipole antenna when a preset angle is scanned is 3dB lower than that without scanning. In the embodiment of the present application, the length and width of the antenna unit 122 in the antenna array structure 12 are constant, and then the antenna length of the dipole antenna can be adjusted by adjusting the electrical length of the feeding network 11. Different feeding networks 11 correspond to different electrical lengths, so that the antenna array structure 12 can emit electromagnetic waves at different scanning angles.

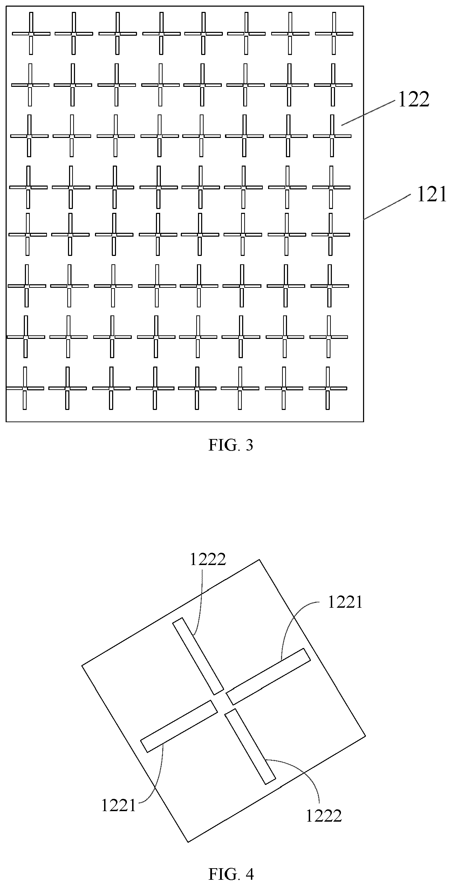

Please further refer to FIG. 3 and FIG. 4. The antenna array structure 12 includes a substrate 121 and a plurality of antenna units 122 arranged on the substrate 121, and the plurality of antenna units 122 are arranged in an array to form an antenna array; where the antenna unit 122 includes a first antenna element 1221 and a second antenna element 1222, and the length direction of the first antenna element 1221 is perpendicular to the length direction of the second antenna element 1222.

As shown in FIG. 4, the first antenna element 1221 may be composed of two metal patches, and there is a gap between the two metal patches; the second antenna element 1222 may also be composed of two metal patches, and there is also a gap between the two metal patches. The first antenna element 1221 and the second antenna element 1222 form a structure similar to a cross, that is, the first antenna element 1221 is perpendicular to the second antenna element 1222, and then in the case of connecting the feeding network 11, the first antenna element 1221 and the second antenna element 1222 can form a vertically polarized antenna, a cross-polarized antenna or a circularly polarized antenna. In this way, the polarization form of the antenna module 10 can be effectively expanded, so that the antenna module 10 can emit electromagnetic waves in different angles and directions according to needs, so that electromagnetic waves cover the device to be charged to better realize wireless charging.

Optionally, the length of the first antenna element 1221 is the same as the length of the second antenna element 1222, and the length of the first antenna element 1221 may be determined based on the operating frequency band of the antenna module 10. For example, the operating frequency band of the antenna module 10 is 20 GHz, and the work of the spot frequency antenna is not restricted by the bandwidth, so the length of the first antenna element 1221 is set to the maximum electrical length so that the antenna module 10 does not have grating lobes in this frequency band, that is, *λ*/2=7.5mm, where *λ* is the operating wavelength of the current aperture antenna, that is, the operating wavelength of the antenna in the 20GHz frequency band.

It should be noted that when the electromagnetic wave propagates in the path, increasing the operating frequency increases the path attenuation, but the maximum gain of the phased array antenna with the aperture area S is 4*πS*/*λ*², where *λ* is the operating wavelength of the current aperture antenna, and increasing the working frequency makes *λ* decrease. In the embodiment of the present application, the antenna array structure 12 includes several antenna units 122, and therefore when the number of antenna units 122 with a half-wavelength unit size increases under the same area, the gain is also improved, and the relative increase in the final gain and the relative increase in the path loss are offset, which solves the problem of large loss in a high-frequency path.

In the embodiment of the present application, several antenna units 122 are arrayed on the substrate 121 to form an antenna array. As shown in FIG. 3, there are 64 antenna units 122 arranged on the substrate 121 in an 8×8 array. Of course, the number of antenna units 122 may also be in other possible forms, which are not specifically limited in this embodiment of the present application.

Further, the control system is configured to control the feeding network 11 to feed any one of the first antenna element 1221 and the second antenna element 1222, so as to excite the antenna unit 122 to form a single polarized antenna, or the control system is configured to control the feeding network 11 to feed the first antenna element 1221 and the second antenna element 1222, so as to excite the antenna unit 122 to form a dual-polarized antenna or circularly polarized antenna.

For example, the control system may control the feeding network 11 to be connected to all the first antenna elements 1221 in the antenna array structure 12, so as to feed the first antenna elements 1221 to form a single polarized antenna, and the single polarized antenna can generate electromagnetic waves of a specific radiation direction, which can also realize the wireless charging of the device to be charged, and the single-polarized antenna is not easy to be interfered.

Alternatively, the control system may also control the feeding network 11 to feed the first antenna element 1221 and the second antenna element 1222 to form a dual-polarized antenna or a circularly polarized antenna. In this way, the antenna module 10 is able to radiate electromagnetic waves in different angle directions, so as to realize wireless charging of the device to be charged.

In the embodiment of the present application, the driving mechanism can drive one or more antenna modules 10 in the at least one antenna module 10 to move, where the movement includes rotation and motion.

In an optional implementation manner, the driving mechanism is configured to drive the target antenna module to rotate, thereby changing the radiation direction of the antenna module 10. For example, the number of the at least one antenna module 10 is one, and if the device to be charged is located behind the antenna module 10, the driving mechanism may drive the antenna module 10 to rotate so that the antenna module 10 faces the device to be charged, and then the electromagnetic wave generated by the antenna array structure 12 of the antenna module 10 can cover the device to be charged, so as to realize the charging of the device to be charged.

Alternatively, if the number of the at least one antenna module 10 is greater than one, the driving mechanism may also drive one or more of the antenna modules 10 to rotate. For example, if the device to be charged faces one of the antenna modules 10, but the device to be charged is located outside the electromagnetic wave scanning angle of the antenna module 10, the driving mechanism may drive the antenna module 10 to rotate, so that the electromagnetic wave scanning angle of the antenna module 10 covers the device to be charged. Alternatively, if there are multiple devices to be charged, and different devices to be charged face different antenna modules 10, the driving mechanism can also control multiple antenna modules 10 to rotate, so that each device to be charged can be located within the coverage range of the electromagnetic wave scanning angle of the corresponding antenna module 10, so that the wireless charging device can charge multiple devices to be charged at the same time in a wireless manner.

Optionally, the antenna module 10 can be provided with a corresponding turntable, and the driving mechanism can realize the rotation of the antenna module 10 by controlling the rotation of the turntable. The driving mechanism can be equipped with gears that mesh with the turntable, and the rotation of the gears can control the rotation of the turntable. Of course, the driving mechanism controls the rotation of the antenna module 10, and there may be other possible implementation forms, which will not be enumerated in the embodiment of the present application.

In another optional implementation manner, the driving mechanism may also drive the antenna module 10 to move, so that the position of the antenna module 10 changes. Optionally, the wireless charging device includes at least two antenna modules 10, and the driving mechanism is configured to drive the at least two antenna modules 10 to move and splice to form one target antenna module.

In order to better understand the movement of the antenna module 10 in this embodiment, the wireless charging device shown in FIG. 1 and FIG. 2 includes four antenna modules 10 as an example for description, and as shown in FIG. 1 and FIG. 2, four antenna modules 10 are arranged in different directions around the base 20 respectively.

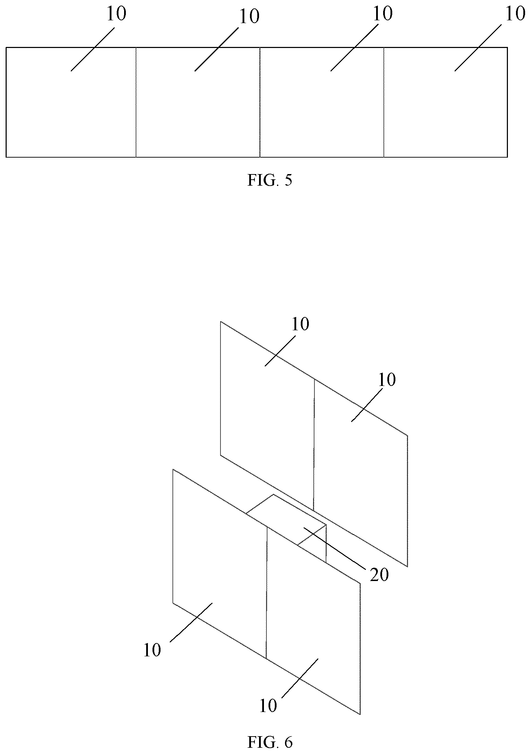

In one scenario, when the sensor of the wireless charging device only receives a charging request from one device to be charged, the control system can control the operation of the driving mechanism to drive the four antenna modules 10 to move and splice to form a large target antenna module. As shown in FIG. 5, the four antenna modules 10 are unfolded and combined to form a larger antenna module, which increases the number of antenna units 122, effectively reduces the beam width, and improves the total gain of the antenna, so that electrical power increases in this scenario. The antenna gain of the target antenna module formed by unfolding and splicing is 6dB higher than that of a single antenna module 10, and the power supply of the wireless charging device can be decreased by 6dB of transmit power to ensure that power output to the device to be charged is the same as that output by the single antenna module 10. Compared with a single antenna module 10, the power consumption of the target antenna module formed by splicing four antenna modules is reduced to 25% of that of a single antenna module 10, thereby increasing the gain of the wireless charging device while effectively reducing the overall power consumption.

In addition, the gain of the target antenna module formed by splicing four antenna modules is 4 times that of a single antenna module 10, and the beam width is reduced by 10 to 17 degrees, which reduces a certain radiation area on the periphery the antenna, increases the pointing direction radiation gain, is more conducive to accurate charging of the device to be charged, and can reduce the amount of radiation in the non-charging space to ensure the safety of users.

Alternatively, the wireless charging device includes at least two antenna modules 10, the driving mechanism is configured to drive the at least two antenna modules 10 to move to form at least two target antenna modules, and electromagnetic waves generated by the antenna array structure in each target antenna module cover different areas respectively.

Optionally, the at least two target antenna modules are disposed at intervals; or the at least two target antenna modules are connected.

For example, in another scenario, when the sensor of the wireless charging device receives charging requests from multiple devices to be charged, the control system determines, according to the charging request, the position of each device to be charged. If there are few locations, the control system can control the movement of the driving mechanism to drive the antenna module 10 to move so that every two antenna modules 10 are spliced to form a new target antenna module. As shown in FIG. 6, the two target antenna modules are arranged opposite to each other. Alternatively, the two target antenna modules formed by splicing two antenna modules may also be connected, for example, the two target antenna modules form a V-shaped arrangement.

In this scenario, the antenna gain of the target antenna module formed by splicing two antenna modules is 3dB higher than that of a single antenna module 10, and the power supply of the wireless charging device can be decreased by 3dB of transmit power to ensure that power output to the device to be charged is the same as that output by the single antenna module 10. Thus, the power consumption of the target antenna module formed by splicing two antenna modules is reduced to 50% of that of a single antenna module 10, which improves the gain of the wireless charging device and can effectively reduce the power consumption of the wireless charging device.

In another scenario, according to the orientation of multiple devices to be charged, the control system can also control the antenna module 10 to move, so that three of the antenna modules 10 move to form a target antenna module and the remaining antenna module 10 move to a corresponding position to face the device to be charged. Correspondingly, the target antenna module formed by splicing three antenna modules can also provide the gain of the wireless charging device and effectively reduce the overall power consumption of the wireless charging device.

Optionally, please refer to FIG. 1. In one scenario, the four antenna modules 10 of the wireless charging device can also work independently, the four antenna modules 10 can also be moved to form a quadrilateral structure as shown in FIG. 1, and each antenna module 10 is responsible for charging devices within a 90-degree range, so that it can take into account the charging needs of nearby devices to be charged, thereby achieving full 360-degree charging coverage, so that the wireless charging device has a larger wireless charging range, wireless charging is more convenient and this provides users with better wireless charging experience.

In this way, the wireless charging device can determine, according to the charging request of the device to be charged, the orientation or position of the device to be charged, the control system controls the operation of the driving mechanism, and then the driving mechanism can control one or more antenna modules 10 to move and splice to form a larger antenna module. This design makes the electromagnetic wave radiation direction and radiation angle of the wireless charging device no longer fixed, and the wireless charging device can flexibly adjust the position and direction of the antenna module 10 according to the orientation and position of the device to be charged, to realize efficient charging, make wireless charging more flexible, and provide users with better wireless charging experience. Moreover, the antenna module formed by splicing can have greater antenna gain, and at the same time, the power consumption of the wireless charging device is lower.

Optionally, each antenna module 10 and the driving mechanism may be detachably connected, thereby making it more convenient to carry and assemble the wireless charging device.

In the embodiment of the present application, the wireless charging device further includes a Fresnel lens (not shown in the figure), and the Fresnel lens is connected to the control system. The Fresnel lens is configured to detect the inherent long-band infrared rays emitted by the human body. After the Fresnel lens detects the long-wave infrared rays of the human body, it sends a feedback signal to the control system. The control system can stops the feeding network 11 from feeding the antenna array structure 12, to stop generating electromagnetic waves to ensure user safety. It can be understood that when the Fresnel lens does not detect the inherent long-band infrared rays emitted by the human body, it means that there is no user nearby at this time, and the wireless charging device can be normally enabled.

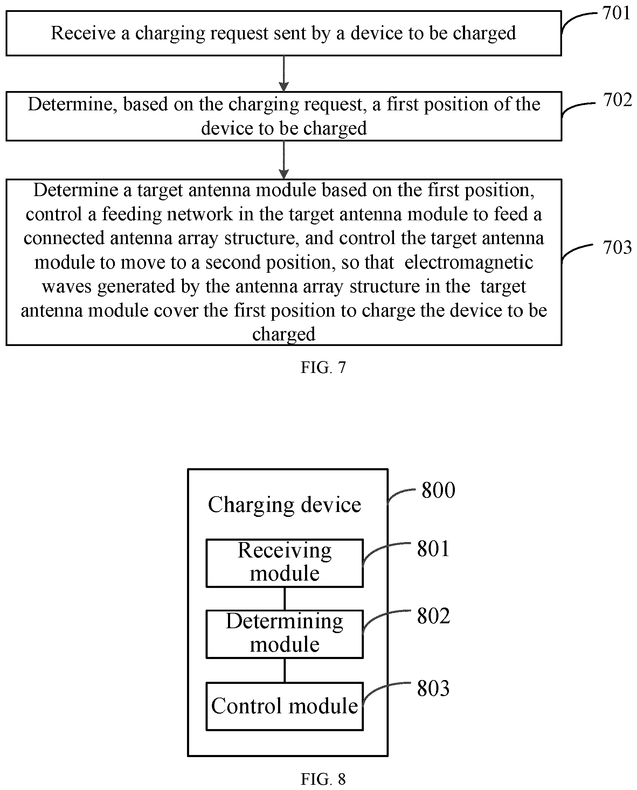

An embodiment of the present application also provides a charging method, and the charging method is applied to the wireless charging device as described above. As shown in FIG. 7, the charging method includes the following steps:
Step 701. Receive a charging request sent by a device to be charged.

Optionally, the charging request may be a wireless signal, such as a Bluetooth signal, an infrared signal, and the like.

In the embodiment of this application, the wireless charging device may be equipped with an infrared receiver. When the device to be charged has a wireless charging demand, the device to be charged may call its internal infrared emitting apparatus to emit a modulated pulse infrared code, that is, the charging request, and then the wireless charging device receives the pulse infrared code through the infrared receiver and demodulates it.

Step 702. Determine, based on the charging request, a first position of the device to be charged.

Optionally, based on the received charging request, for example, based on the above-mentioned pulse infrared code, the wireless charging device can also determine the orientation of the device to be charged, that is, the first position, according to its sending direction.

Step 703: Determine a target antenna module based on the first position, controlling a feeding network in the target antenna module to feed a connected antenna array structure, and controlling the target antenna module to move to a second position, so that electromagnetic waves generated by the antenna array structure in the target antenna module cover the first position to charge the device to be charged;
where the target antenna module is at least one of the at least one antenna module.

In the embodiment of the present application, after the wireless charging device determines the first position of the device to be charged, it determines the corresponding target antenna module based on the first position. For example, if the device to be charged is located on the left side of the wireless charging device, the antenna module on the left side of the wireless charging device is determined as the target antenna module. Further, the feeding network in the target antenna module is controlled to feed the antenna array structure in the antenna module, and the target antenna module is controlled to move to the second position, for example, the target antenna module is controlled to rotate so that its center faces the device to be charged, to further make the electromagnetic wave generated by the target antenna module cover the first position where the device to be charged is located, so as to charge the device to be charged. For a specific implementation solution for the wireless charging device to control the movement of the target antenna module, refer to the description in the above embodiments, and details are not repeated here.

In this way, the wireless charging device can determine the target antenna module according to the first position of the device to be charged, and can control the target antenna module to move to the second position corresponding to the first position. For movement and splicing manners of the target antenna module, refer to the specific description in the wireless charging device embodiment mentioned above, as shown in the optional splicing manners in FIG. 1, FIG. 5, and FIG. 6. Thus, regardless of where the device to be charged is located relative to the wireless charging device, the device to be charged can be located within the coverage of electromagnetic waves to realize wireless charging, and the device to be charged does not need to be placed at a specific location, which makes the wireless charging manner of the wireless charging device more flexible for the charging device and provides users with a better wireless charging experience.

Optionally, in a case that each antenna module includes at least one feeding network, the controlling a feeding network in the target antenna module to feed a connected antenna array structure includes:
determine a target feeding network based on the first position, and controlling the target feeding network in the target antenna module to feed the connected antenna array structure;
where the target feeding network is any one of the at least one feeding network.

It should be noted that different feeding networks are configured to make the antenna array structure emit electromagnetic waves at different scanning angles, that is, one feeding network corresponds to one scanning angle. After the wireless charging device determines the first position of the device to be charged, it determines the target feeding network that best matches the first position, and then controls the target feeding network in the target antenna module to feed the antenna array structure connected to it, to generate electromagnetic waves at a scanning angle corresponding to the target feeding network, so that the electromagnetic waves cover the first position.

For example, 1 antenna module includes 4 feeding networks, and the scanning angles corresponding to the 3 feeding networks are 0 degrees, 30 degrees and 60 degrees respectively. If the first position is detected to be within the 80-degree scanning range of the target antenna module, the corresponding feeding network with a scanning angle of 60 degrees can be determined as the target feeding network, and then the feeding network is controlled to feed the antenna array structure. The antenna module generates electromagnetic waves with a scanning angle of 60 degrees; and if the electromagnetic wave still does not cover the first position, the driving mechanism is further controlled to operate to drive the target antenna module to rotate at a certain angle, so that the electromagnetic wave covers the first position, thereby realizing wireless charging of the device to be charged.

In this way, the wireless charging device can also select, based on the position of the device to be charged, a target feeding network matching the first location, to feed the antenna array structure, thereby enabling the wireless charging device to select a feeding method more flexibly.

Optionally, the controlling the target antenna module to move to the second position includes:
controlling the target antenna module to rotate to the second position.

In this embodiment, the wireless charging device may only control the rotation of the target antenna module, so that the electromagnetic wave generated by the target antenna module covers the first position of the device to be charged, so as to realize wireless charging of the device to be charged. For a specific implementation solution for the wireless charging device to control the rotation of the target antenna module, refer to the specific description in the above embodiments, and details are not repeated here.

Optionally, in the case that the wireless charging device includes at least two antenna modules, the controlling the target antenna module to move to the second position includes:
controlling at least two second antenna modules to move to the second position to splice to form the target antenna module, where a second antenna module is any one of the at least two antenna modules.

It should be noted that, for a specific implementation solution of this embodiment mode, reference may be made to the specific descriptions in the foregoing embodiments, and details are not repeated here.

Optionally, in the case that the wireless charging device includes a Fresnel lens, the method further includes:
in a case that a target infrared wavelength within a preset range is detected based on the Fresnel lens, controlling the feeding network in the target antenna module to stop feeding the antenna array structure.

The Fresnel lens is configured to detect the inherent long-band infrared rays emitted by the human body, and when the long-wave infrared rays (and the target infrared wavelength) of the human body is detected based on the Fresnel lens, the wireless charging device can stop the feeding network in the target antenna module from feeding the antenna array structure, and then the target antenna module stops generating electromagnetic waves, so as to avoid the radiation damage of electromagnetic waves to the human body and ensure the safety of users. Understandably, when the Fresnel lens does not detect the target infrared wavelength emitted by the human body, it indicates that there is no user nearby, and the wireless charging device can be normally activated.

The embodiment of the present application also provides a charging apparatus. The charging apparatus may be a functional module or a device in the wireless charging device, or may be the wireless charging device, which may include all technical features in the embodiments of the wireless charging device.

As shown in FIG. 8, the charging apparatus 800 includes: a receiving module 801, configured to receive a charging request sent by a device to be charged; a determining module 802, configured to determine, based on the charging request, a first position of the device to be charged; and a control module 803, configured to determine a target antenna module based on the first position, control a feeding network in the target antenna module to feed a connected antenna array structure, and control the target antenna module to move to a second position, so that electromagnetic waves generated by the antenna array structure in the target antenna module cover the first position to charge the device to be charged;
where the target antenna module is at least one of the at least one antenna module.

Optionally, when each of the antenna modules includes at least one feeding network, the control module 803 is further configured to:
determine a target feeding network based on the first position, and controlling the target feeding network in the target antenna module to feed the connected antenna array structure;
where the target feeding network is any one of the at least one feeding network.

Optionally, the control module 803 is further configured to:
control the target antenna module to rotate to the second position.

Optionally, when the charging device includes at least two antenna modules, the control module 803 is further configured to:
control at least two second antenna modules to move to the second position to splice to form the target antenna module, where a second antenna module is any one of the at least two antenna modules.

Optionally, in the case where the charging device includes a Fresnel lens, the control module 803 is further configured to:
in a case that a target infrared wavelength within a preset range is detected based on the Fresnel lens, control the feeding network in the target antenna module to stop feeding the antenna array structure.

It should be noted that the charging device provided in the embodiment of the present application can implement various processes implemented in the above charging method embodiment, and details are not repeated here to avoid repetition.

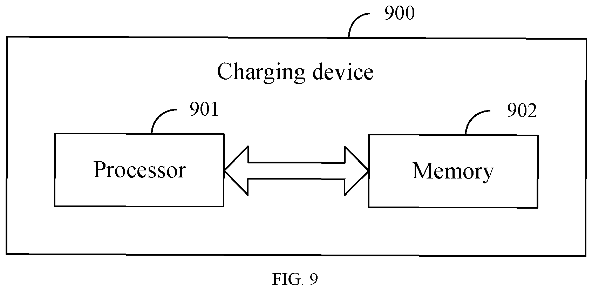

Optionally, as shown in FIG. 9, the embodiments of the present application further provide a wireless charging device 900, including a processor 901, a memory 902, and a program or an instruction stored in the memory 902 and executable on the processor 901, When the program or instruction is executed by the processor 901, each process of the charging method embodiment described above can be realized, and the same technical effect can be achieved. To avoid repetition, details are not repeated herein.

The embodiments of the present application also provide a readable storage medium, the readable storage medium may be nonvolatile or volatile, and a program or an instruction is stored in the readable storage medium, and when the program or the instruction is executed by the processor, each process of the embodiment of the charging method is performed, and the same technical effect can be achieved. To avoid repetition, details are not repeated herein.

The processor is a processor in the electronic device in the foregoing embodiment. The readable storage medium includes a computer-readable storage medium such as a read-only memory (Read-Only Memory, ROM), a random access memory (Random Access Memory, RAM), a magnetic disk, an optical disc, or the like.

An embodiment of the present application further provides a chip, the chip includes a processor and a communication interface, the communication interface is coupled to the processor, and the processor is configured to run programs or instructions to implement each process of the embodiment of the foregoing charging method and the same technical effects can be achieved. To avoid repetition, details are not described herein again.

It should be understood that the chip in the embodiments of this application may also be referred to as a system-level chip, a system chip, a chip system, a system on chip, or the like.

The embodiments of the present application further provide a computer program product, the computer program product is stored in a non-transient readable storage medium, and the computer program product is executed by at least one processor to implement the various processes of the charging method embodiments, and the same technical effects can be achieved. To avoid repetition, details are not described herein again.

The embodiments of this application are described with reference to the accompanying drawings. However, this application is not limited to the foregoing specific implementations. The foregoing specific implementations are merely examples, but are not limiting. Under the enlightenment of this application, a person of ordinary skill in the art may make many forms without departing from the objective and the scope of the claims of this application, and these forms all fall within the protection scope of this application.

## Claims

1. A wireless charging device, comprising a power supply, a control system, a driving mechanism, and at least one antenna module, wherein the power supply is connected to the control system, the control system is connected to the driving mechanism, the driving mechanism is connected to the at least one antenna module, each antenna module comprises an antenna array structure and a feeding network connected to the antenna array structure, and the feeding network is connected to the control system;
wherein the feeding network is configured to feed the antenna array structure, so that the antenna array structure emits electromagnetic waves, and the driving mechanism is configured to drive a target antenna module to move, so that electromagnetic waves generated by the antenna array structure in the target antenna module cover a device to be charged, and the target antenna module is an antenna module whose antenna array structure generates electromagnetic waves.

2. The wireless charging device according to claim 1, wherein each antenna module comprises at least one feeding network, each feeding network is connected to the control system, and the control system is configured to control a target feeding network to connect to the antenna array structure, so that the antenna array structure emits electromagnetic waves, and the target feeding network is any one of the at least one feeding network;
wherein different feeding networks are configured to make the antenna array structure emit electromagnetic waves at different scanning angles.

3. The wireless charging device according to claim 2, wherein different feeding networks correspond to different electrical lengths, so that the antenna array structure emits electromagnetic waves at different scanning angles.

4. The wireless charging device according to claim 1, wherein the antenna array structure comprises a substrate and a plurality of antenna units arranged on the substrate, and the plurality of antenna units are arranged in an array to form an antenna array;
wherein an antenna unit comprises a first antenna element and a second antenna element, and a length direction of the first antenna element is perpendicular to a length direction of the second antenna element.

5. The wireless charging device according to claim 4, wherein the control system is configured to control the feeding network to feed any one of the first antenna element and the second antenna element, so as to excite the antenna unit to form a single polarized antenna; or
the control system is configured to control the feeding network to feed the first antenna element and the second antenna element, so as to excite the antenna unit to form a dual-polarized antenna or a circularly polarized antenna.

6. The wireless charging device according to claim 1, wherein the wireless charging device comprises a sensor for sensing an orientation of the device to be charged, and the sensor is connected to the control system.

7. The wireless charging device according to claim 1, wherein the driving mechanism is configured to drive the target antenna module to rotate.

8. The wireless charging device according to claim 1, wherein the wireless charging device comprises at least two antenna modules, and the driving mechanism is configured to drive the at least two antenna modules to move to splice to form the target antenna module.

9. The wireless charging device according to claim 1, wherein the wireless charging device comprises at least two antenna modules, the driving mechanism is configured to drive the at least two antenna modules to move to form at least two target antenna modules, and electromagnetic waves generated by the antenna array structure in each target antenna module cover different areas respectively.

10. The wireless charging device according to claim 9, wherein the at least two target antenna modules are disposed at intervals; or
the at least two target antenna modules are connected.

11. The wireless charging device according to claim 1, wherein the wireless charging device further comprises a Fresnel lens connected to the control system.

12. A charging method, applied to the wireless charging device according to any one of claims 1 to 11, the method comprising:
receiving a charging request sent by a device to be charged;
determining, based on the charging request, a first position of the device to be charged; and
determining a target antenna module based on the first position, controlling a feeding network in the target antenna module to feed a connected antenna array structure, and controlling the target antenna module to move to a second position, so that electromagnetic waves generated by the antenna array structure in the target antenna module cover the first position to charge the device to be charged;
wherein the target antenna module is at least one of the at least one antenna module.

13. The method according to claim 12, wherein in a case that each antenna module comprises at least one feeding network, the controlling a feeding network in the target antenna module to feed a connected antenna array structure comprises:
determining a target feeding network based on the first position, and controlling the target feeding network in the target antenna module to feed the connected antenna array structure;
wherein the target feeding network is any one of the at least one feeding network.

14. The method according to claim 12, wherein the controlling the target antenna module to move to a second position comprises:
controlling the target antenna module to rotate to the second position.

15. The method according to claim 12, wherein in a case that the wireless charging device comprises at least two antenna modules, the controlling the target antenna module to move to the second position comprises:
controlling at least two second antenna modules to move to the second position to splice to form the target antenna module, wherein a second antenna module is any one of the at least two antenna modules.

16. The method according to claim 12, wherein in a case that the wireless charging device comprises a Fresnel lens, the method further comprises:
in a case that a target infrared wavelength within a preset range is detected based on the Fresnel lens, controlling the feeding network in the target antenna module to stop feeding the antenna array structure.

17. A charging apparatus, applied to the charging method according to any one of claims 12 to 16, the apparatus comprising:
a receiving module, configured to receive a charging request sent by a device to be charged;
a determining module, configured to determine, based on the charging request, a first position of the device to be charged; and
a control module, configured to determine a target antenna module based on the first position, control a feeding network in the target antenna module to feed a connected antenna array structure, and control the target antenna module to move to a second position, so that electromagnetic waves generated by the antenna array structure in the target antenna module cover the first position to charge the device to be charged;
wherein the target antenna module is at least one of the at least one antenna module.

18. A wireless charging device, comprising a processor, a memory, and a program or an instruction stored in the memory and executable on the processor, wherein when the program or the instruction is executed by the processor, steps of the charging method according to any one of claims 12 to 16 are implemented.

19. A readable storage medium, storing a program or an instruction, wherein when the program or the instruction is executed by a processor, steps of the charging method according to any one of claims 12 to 16 are implemented.

20. A chip, wherein the chip comprises a processor and a communication interface, the communication interface is coupled to the processor, and the processor is configured to run a program or an instruction, to perform steps in the charging method according to any one of claims 12 to 16.

21. A computer program product, wherein the computer program product is stored in a non-transient storage medium, and the computer program product is executed by at least one processor to implement steps of the charging method according to any one of claims 12 to 16.

22. A communication device, configured to execute steps of the charging method according to any one of claims 12 to 16.
